# EUROPEAN PATENT APPLICATION

(11) **EP 0 982 085 A2**
(43) Date of publication of application: **01.03.2000**
(21) Application number: 98830513.2
(22) Date of filing: 27.08.1998
(51) Int. Cl.: B21D 28/00, B21D 28/12, B21D 37/14, G05B 19/12, B23Q 17/00

(54) **Punching machine and relative punching system comprising a tool store**

(71) Applicant: RAINER S.r.l., I-40012 Calderara di Reno (Bologna) (IT)
(72) Inventor: Perazzolo, Eugenio, 45100 Rovigo (IT)
(74) Representative: Jorio, Paolo

(57) **Abstract**

A punching machine (1) having a work table (4), a work station (3), and a member for moving metal sheets (2) on the work table (4) to and from the work station (3); the work station (3) having a top turret (6) supporting a number of punch assemblies (8), a bottom turret (7) supporting a number of die assemblies (9), and a ram (12) for pressing a punch (24) onto a respective die assembly (9); the punching machine (1) being characterized by each punch assembly (8) and each die assembly (9) having a respective microchip (100), and by also having at least one device (110) for reading and writing on the microchips (100) data relative to the respective punch assembly (8) and/or the respective die assembly (9).

## Description

The present invention relates to a sheet metal punching machine and relative punching system comprising a tool store.

As is known, sheet metal punching machines substantially comprise a work table, a work station, and a member for moving the sheets on the work table to and from the work station. The work station in turn comprises a top turret supporting a number of punch assemblies, a bottom turret supporting a number of die assemblies, and a ram for pressing a punch onto a corresponding die. Some of the tools on the top turret provide for forming holes in the sheet, while others may, for example, provide for deforming parts of the sheet.

The current tendency with this sort of machine is to maximize automation to dispense with skilled labour and, in particular, permit nighttime operation to maximize utilization. As a result, the tools are provided with codes, e.g. optical codes, as in Italian Patent Application BO96A000230 filed by the present Applicant, to enable improved tool control during transfer from the store to the punching machine.

Commencing with the problems inherent in the device described in Italian Patent Application BO96A000230, the present invention is designed to provide a straightforward, low-cost, practical solution to the difficulties encountered in controlling the punch and die assemblies, and also provides, unlike currently used punching machines, for continually updating the data of each punch or die assembly.

That is, according to the present invention, each punch and/or die assembly is provided with a microchip representing a sort of "identity card", which, unlike the optical codes in Italian Patent Application BO96A000230, may be updated continually with data - normally data which tends to vary in time - relative to each punch and/or die assembly.

The microchip data may, for example, comprise the number of blows performed on the punch or die assembly, the date on which the tool was last sharpened, the correct operating position of the tool, etc.

The device for reading/writing data on the microchips according to the present invention may be used to advantage on a punching system as described and claimed in Italian Patent Application BO97A000432 filed by the present Applicant, and the text of which is considered an integral part of the present disclosure.

According to the present invention, therefore, there is provided a punching machine as described in Claim 1.

According to the present invention, there is also provided a relative punching system comprising a tool store.

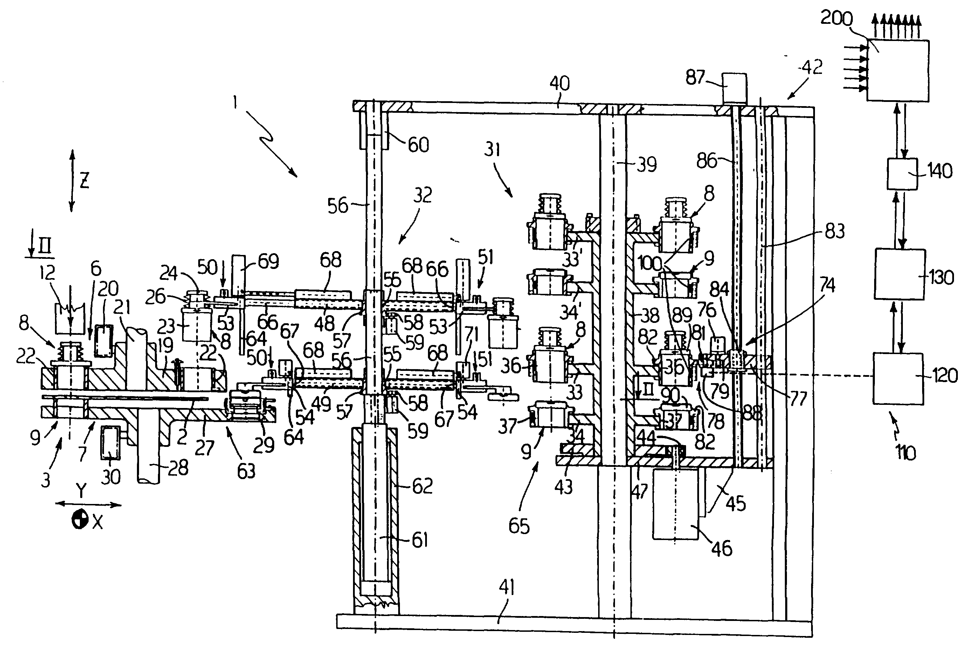

A preferred, non-limiting embodiment of the present invention will be described by way of example with reference to the attached drawing showing a schematic vertical section of a punching machine in accordance with the invention and combined with a tool store.

Number 1 in the accompanying drawing indicates as a whole a punching machine for machining a metal sheet 2, and which substantially comprises a work station 3, and a horizontal work table 4 for supporting sheet 2 as this is moved along two coordinate X, Y axes with respect to work station 3.

More specifically, punching machine 1 is a turret type, and comprises two superimposed turrets 6 and 7 supporting a number of respective punch assembly-die assembly pairs 8-9. Turrets 6 and 7 are rotated selectively to select the punch assembly-die assembly pair 8-9 to be moved into work station 3 where a ram 12 moves along a coordinate axis Z to engage the punch assembly 8 and punch a hole in sheet 2.

More specifically, turret 6 is defined by a disk 19 rotated selectively on a shaft 21 by a servomotor 20; disk 19 comprises a number of peripheral seats for housing punch assemblies 8; each seat comprises a sleeve 22; and each punch assembly 8 is defined by a punch holder 23 insertable inside sleeve 22, and by a punch 24 movable a given distance axially inside holder 23 in opposition to a spring 26. similarly, turret 7 is defined by a disk 27 rotated selectively on a shaft 28 by a servomotor 30, and comprises a number of peripheral seats for housing die assemblies 9, and each comprising a sleeve 29.

According to the invention, machine 1 comprises a store 31 for a number of punch assembly-die assembly pairs 8-9; and a device 32 for exchanging said pairs between turrets 6, 7 and store 31. Store 31 comprises at least one pair of disk-shaped supports 33, 34, the top one 33 of which comprises a number of seats 36 for respective punch assemblies 8, and the bottom one 34 of which comprises a corresponding number of seats 37 for respective die assemblies 9.

More specifically, store 31 comprises two pairs of supports in the form of pairs of disks 33, 34 and 33', 34', which all have the same diameter and are all fitted to a hollow shaft 38 rotating on a vertical shaft 39 fitted to two plates 40 and 41 of a fixed frame 42. Hollow shaft 38 is also fitted with a gear 43 meshing with a pinion 44 of a servomotor 46 fitted to a bracket 45 in turn fitted to another plate 47 of frame 42.

Device 32 for changing punch assembly-die assembly pairs 8-9 comprises a pair of change members associated with turrets 6, 7 and movable to exchange a punch assembly-die assembly pair 8-9 on turrets 6, 7 for a punch assembly-die assembly pair 8-9 on disk pair 33, 34 or 33', 34'. In the embodiment shown in the accompanying drawing, said change members are defined by two identical so-called double arms 48, 49, which pivot along the center lines and each have two ends 50 and 51. Ends 50, 51 of arm 48 are fitted with two pickup members 53 for punch assemblies 8, and ends 50, 51 of arm 49 with two pickup members 54 for die assemblies 9.

More specifically, each arm 48, 49 is fitted to a respective sleeve 55 fitted in rotary and axially-fixed manner to a cylindrical bar 56; each sleeve 55 is integral with a corresponding gear 57 meshing with a pinion 58 of a corresponding reversible servomotor 59 fitted to bar 56; and bar 56 is guided by a sleeve 60 fitted to plate 40, and is moved by a pneumatic actuator. More specifically, bar 56 is integral with a piston 61 of a pneumatic cylinder 62.

In one particular embodiment of the invention applied to a machine described in detail in said Italian Patent Application BO97A000432 filed by the present Applicant, disk 19 of top turret 6 is smaller in diameter than disk 27 of bottom turret 7, so that turrets 6 and 7 rotate on respective shafts 21 and 28 offset with respect to each other, and seats 29 of bottom turret 7 are left exposed by top turret 6 on the opposite side to work station 3.

The two seats 22 and 29 of disks 19 and 27 diametrically opposite the seats in work station 3 are located in two positions defining a change station 63 in which to change punch assembly-die assembly pair 8-9; and, at rest, one of the two pickup members 53, 54 of both arms 48, 49 is located at change station 63.

According to one characteristic of the invention, each pickup member 53, 54 slides on respective arm 48, 49 both radially and axially with respect to the axis of bar 56. More specifically, each pickup member 53, 54 slides axially on a dovetail guide 64 carried by a bar 66, 67 of each arm 48, 49.

Advantageously, bars 66, 67 are movable telescopically with respect to respective arm 48, 49 by a corresponding pneumatic actuator or cylinder 68; and the axis of bar 56 is equidistant from seat 22 of punch assembly 8 on turret 6 at change station 63, and from seat 36 of punch assembly 8 on disk 33 at a pickup station 65 lying in the plane containing the axes of shaft 39 and bar 56.

Pickup members 53, 54 are in turn movable along respective guides 64 by respective pneumatic actuators or cylinders 69, 71 to insert and remove punch assemblies 8 and die assemblies 9 inside/from respective seats 22, 29 and 36, 37. The height of each die assembly 9 being less than that of punch assembly 8, the travel of actuators 71 of pickup members 54 on arm 49 is less than that of actuators 71 of pickup members 53 on arm 48.

Servomotors 20, 30, 46, 59 and pneumatic cylinders 61, 68, 69, 71 are controlled in known manner by a programmable control unit 200.

The device for changing punch assembly-die assembly pair 8-9 on punching machine 1 operates as follows.
(a) At rest, pneumatic cylinders 68 keep bars 66 and 67 withdrawn inside respective arms 48 and 49, which are kept by cylinder 61 at a height just above turrets 6 and 7. At the start of each cycle to change punch assembly-die assembly pair 8-9, servomotors 20 and 30 rotate disks 19 and 27 of turrets 6 and 7 to bring the punch assembly-die assembly pair 8-9 to be changed into change station 63.
   The rotation of disks 19, 27 to select the punch assembly-die assembly pair 8-9 to be changed may be the same as that required to bring another punch assembly-die assembly pair 8-9 into work station 3, so that one punch assembly-die assembly pair 8-9 may be changed while another pair is working at work station 3. For which purpose, the pair to be changed may advantageously be housed inside seats 22 and 29 of disks 19 and 27 diametrically opposite those of the punch assembly-die assembly pair 8-9 performing the punching operation.
(b) Pickup member 54 at end 50 of arm 49 is therefore located at die assembly 9 to be changed; and cylinder 68 of end 50 of arm 48 is activated to move respective pickup member 53 radially up to punch assembly 8 to be changed.
(c) At the same time, servomotor 46 is operated to move store 31, together with the punch assembly-die assembly pair 8-9 to be withdrawn, into pickup station 65 to withdraw the new punch assembly-die assembly pair 8-9.
(d) The two pneumatic cylinders 69 and 71 at ends 50 are then activated so that pickup members 53 and 54 engage the selected punch assembly 8 and die assembly 9 to be changed on turrets 6 and 7; and the two pneumatic cylinders 69 and 71 at ends 50 are again activated to withdraw the selected punch assembly-die assembly pair 8-9 from seats 22 and 29.
(e) cylinder 62 is then operated immediately to move piston 61 selectively upwards and bring arms 48 and 49 axially onto a level with the pair of disks 33-34, 33'-34' containing the new punch assembly-die assembly pair 8-9 to be withdrawn. Needless to say, if the punch assembly-die assembly pair 8-9 to be withdrawn is located on disk pair 33-34, the above axial movement is not required.
(f) Pneumatic cylinders 68 at ends 51 of the two arms 48 and 49 are then activated so that respective pickup members 53 and 54 respectively engage the punch assembly 8 and die assembly 9 to be withdrawn; and the two cylinders 69 and 71 at ends 51 are then operated to first engage and then withdraw the new punch assembly-die assembly pair 8-9 from seats 36 and 37 in the same way as for the punch assembly-die assembly pair 8-9 on turrets 6 and 7.
(g) The two servomotors 59 are then operated to rotate the two arms 48 and 49 through 180° to bring the punch assembly-die assembly pair 8-9 to be changed up to the seats 36 and 37 of store 31 from which the new punch assembly-die assembly pair 8-9 has been withdrawn; cylinder 68 at end 50 of arm 49 is operated to vertically align the withdrawn die assembly 9 with the respective punch assembly 8; and pneumatic cylinders 69, 71 at ends 50 are again operated to insert the withdrawn punch assembly-die assembly pair 8-9 inside the two seats 36 and 37.
(h) The two cylinders 68 at ends 50 are then operated to withdraw respective pickup members 53 and 54 radially; and cylinder 68 at end 51 is operated to vertically align the withdrawn die assembly 9 with seat 29 of turret 7 into which it is to be inserted. Cylinder 62 may then be activated to restore arms 48 and 49 onto a level with disk 19 and 27 of turrets 6, 7. And, finally, the two cylinders 69 and 71 are operated to first move pickup members 53 and 54 downwards and insert the new punch assembly-die assembly pair 8-9 inside seats 22 and 29 of turrets 6 and 7, and then restore pickup members 53, 54 to the rest position shown in the drawing.

Punching machine 1 may advantageously comprise an orienting device - indicated as a whole by 74 - for orienting punch assembly 8 and/or die assembly 9, and which is activated when required by at least one of punch assembly-die assembly pairs 8-9. For example, orientation may be required when performing more than one punching operation using the same punch assembly-die assembly pair 8-9, and when, in a subsequent punching operation, the punch assembly 8 and die assembly 9 assume different angular positions with respect to each other or with respect to the previous punching operation.

According to the invention, orienting device 74 may be associated with store 31, and comprises a reversible servomotor 76 carried by an element or support 77 outside store 31 at an orienting station 78. Servomotor 76 selectively rotates a straight-toothed pinion 79, which, via a transmission gear 81, meshes with a straight-toothed ring gear 82 integral with each of seats 36 of punch assemblies 8 and/or seats 37 of die assemblies 9.

When, as shown in the drawing, store 31 comprises a number of pairs of disks 33, 34, orienting station 78 may advantageously be located diametrically opposite pickup station 65. Support 77 slides along a cylindrical or prismatic guide bar 83 parallel to shaft 38 and fitted to plates 40 and 47, and is fitted with a nut screw, e.g. a recirculating-ball nut screw, 84 engaging a screw 86, which is parallel to bar 83, rotates on plates 41 and 47, and is rotated selectively by a reversible servomotor 87 carried by plate 40.

Finally, support 77 is fitted underneath with a known read/write head 88 for reading an identification code located on seat 36, 37 of punch assembly 8 or die assembly 9 and contained in a respective microchip 100. Alternatively, microchip 100 may be located on a flange 89 of punch assembly 8 and/or on a flange 90 of die assembly 9, in which case, support 77 is first set to an axial read position corresponding to each disk 33, 33' and 34, 34', and is then moved axially along the axis of bar 83 to engage ring gear 82.

If a punch assembly 8 and/or respective die assembly 9 needs orienting, device 74 performs an orienting cycle after the punch assembly-die assembly pair 8-9 is returned to seats 36 and 37 of store 31. For example, to rotate a punch assembly 8 on disk 33, servomotor 87 is first operated in one of two directions to set support 77 to the read position corresponding to disk 33 - if the support is not already set to that position; servomotor 87, by means of screw 86 and nut screw 84, moves support 77 along bar 83 to bring read/write head 88 onto a level with microchips 100 of punch assemblies 8 or seats 36 on disk 33; and servomotor 46 is operated to feed the punch assemblies 8 on disk 33 sequentially past read/write head 88.

Upon read/write head 88 reading the code in the microchip 100 of the required punch assembly 8, servomotor 46 is arrested automatically. If the microchip 100 is located on flange 89, servomotor 87 lowers support 77, which causes transmission gear 81 to mesh with ring gear 82 of seat 36 of the selected punch assembly 8. Servomotor 76 is then operated in the required orientation direction, and, by means of pinion 79 and gear 81, rotates ring gear 82 together with punch assembly 8.

Finally, servomotor 87 moves support 77 vertically to disengage gear 81 and ring gear 82 and so enable rotation of shaft 38 to perform a punch assembly-die assembly pair 8-9 change cycle. If die assembly 9 also needs orienting, the orienting cycle is the same as for punch assembly 8, and therefore requires no explanation.

Besides assisting orientation of punch assembly 8 and/or die assembly 9 by orienting device 74 as described above, read/write head 88 also provides for reading other data in microchip 100, such as the number of blows performed by ram 12 on punch assembly 8 or die assembly 9, the date on which punch assembly 8 or die assembly 9 was last sharpened, etc. Read/write head 88 may also be used to advantage for determining correct mating of punch assembly 8 and the required die assembly 9. In this connection, it should be remembered that each punch assembly 8 is normally associated with a number of die assemblies 9 depending on the thickness of sheet 2 for punching, so that read/write head 88, which forms part of a more complex device 110 for reading/writing microchips 100, may be used to ensure correct mating of each punch assembly 8 with the required die assembly 9.

As shown in the accompanying drawing, in addition to read/write head 88, device 110 also comprises an amplifier 120 connected to head 88; and a data processing station 130 connected electronically to control unit 200 of machine 1 via an electronic interface 140. Read/write head 88 therefore not only provides for reading the data in microchips 100, in the same way for example as conventional optical bar code systems, but also for recording data from control unit 200 of machine 1 in microchips 100. That is, read/write head 88 provides for recording any data - e.g. the number of blows performed on a punch 24 of a punch assembly 8 or on a die assembly 9 in each complete machining cycle of machine 1 - inside any microchip 100 of a respective punch assembly 8 or respective die assembly 9. Control unit 200 is of course designed to count the number of blows performed by ram 12, and to follow punch assembly 8 or die assembly 9 as it is returned to store 31. Once punch assembly 8 or die assembly 9 is returned to respective seat 36 or 37 by change device 32, punch assembly 8 or die assembly 9 may be positioned, by means of the system described previously, in front of read/write head 88 of device 110 to record any new data from control unit 200 in the respective microchip 100.

In an embodiment not shown, machine 1 may advantageously be provided with another device 110 in which the respective read/write head 88 is selectively located on a level with disks 19, 27. More specifically, by means of a system similar to that indicated by 77, 83, 84, 86, 87, read/write head 88 may be moved vertically into a position facing the selected disk 19, 27, and the required punch assembly 8 or die assembly 9 with the respective microchip 100 may be positioned facing read/write head 88 by rotating respective disk 19, 27 about respective shaft 21, 28.

A device 110 in the vicinity of machine 1 may be used for numerous purposes.

For example, before ram 12 is activated to perform the punching operation, device 110, by means of read/write head 88, may read the content of respective microchips 100 on punch assembly 8 and die assembly 9 to ensure punch assembly 8 corresponds with the die assembly 9 required for that particular punching operation. Read/write head 88 also provides for ensuring punch assembly 8 has the characteristics required for the machining operation, and possibly also for ensuring punch assembly 8 and the selected die assembly 9 are oriented correctly and the same way. In the event any of the above requirements are not met, an error signal is generated or an error correcting procedure performed, e.g. to automatically reposition a new punch assembly 8 or a new die assembly 9 in place of the unsuitable one.

The above check may provide, for example, for making a complete turn of disks 19, 27 to determine whether a suitable punch assembly 8 or die assembly 9 is or is not already assembled.

If microchips 100 are fitted to respective flanges 89, 90 of punch assembly 8 and die assembly 9, punching machine 1 according to the present invention provides for extremely rapid loading and unloading of punch and die assemblies 8, 9 in an out of store 31. In which case, as opposed to checking and memorizing the characteristics of each punch assembly 8 or die assembly 9 in the memory of control unit 200 of machine 1, the operator need simply insert the punch and/or die assemblies 8, 9, even at random, inside seats 36, 37 of store 31, and control unit 200, together with device 110 of store 31, will provide for memorizing the characteristics of each punch assembly 8 or die assembly 9 in store 31.

A device 110 may obviously be located at any point along the path from store 31 to machine 1, and in particular at change device 32.

The system as a whole defined by punching machine 1, by store 31 and by change device 32 may therefore comprise a number of devices 110 for repeat control of punch assemblies 8 and die assemblies 9, in particular for determining whether a given punch assembly 8 is assigned a suitable die assembly 9 for the type of sheet 2 for machining.

Device 110 according to the present invention provides not only for controlling the flow of punch assemblies 8 and/or die assemblies 9 from store 31 to machine 1 and vice versa, but also for updating the data in microchip 100 of each punch assembly 8 and/or die assembly 9.

## Claims

1. A punching machine (1) comprising a work table (4), a work station (3), and a member for moving metal sheets (2) on the work table (4) to and from the work station (3); said work station (3) comprising a ram (12) for pressing a punch (24) onto a respective die assembly (9) to effect the punching operation; the punching machine (1) being characterized in that each punch assembly (8) and each die assembly (9) are each provided with a microchip (100); and by also comprising at least one device (110) for reading and writing on said microchips (100) data relative to the respective punch assembly (8) and/or the respective die assembly (9).

2. A punching machine (1) as claimed in Claim 1, wherein said device (110), together with a control unit (200), provides for pairing each punch assembly (8) with the correct die assembly (9) according to the particular machining operation and the thickness of the sheet (2).

3. A punching machine (1) as claimed in any one of the foregoing Claims, wherein said device (110) is associated with a store (31) for storing a number of punch assemblies (8) and die assemblies (9).

4. A punching machine (1) as claimed in any one of the foregoing Claims, wherein said device (110) is located at a top turret (6) and a bottom turret (7).

5. A punching machine (1) as claimed in Claim 3, wherein each of said microchips (100) is associated with a respective seat (36, 37) in said store (31); said seats (36, 37) respectively housing said punch assemblies (8) or said die assemblies (9).

6. A punching machine (1) as claimed in Claim 3, wherein each of said microchips (100) is associated with a respective portion (89, 90) of a respective punch assembly (8) or a respective die assembly (9).

7. A punching machine (1) as claimed in any one of Claims 2 to 6, wherein at least one of the punch assembly-die assembly pairs (8-9) in said store (31) is orientable selectively; said orientation being effected by an orienting device (74) associated with said store (31).

8. A punching machine (1) as claimed in Claim 7, wherein said orienting device (74) is located inside said store (31); selecting means (43-46, 84-87, 88) being provided to select the punch assembly (8) and/or the die assembly (9) to be oriented.

9. A punching machine (1) as claimed in any one of Claims 6 to 8, wherein said selecting means (43-46, 84-87, 88) comprise a read/write head (88) for reading/writing data in said microchips (100).

10. A punching machine (1) as claimed in Claim 8 or 9, wherein said selecting means (43-46, 84-87, 88) comprise a servomotor (46) for rotating disks (33, 34), forming part of said store (31), with respect to said orienting device (74).

11. A punching machine (1) as claimed in claim 10, wherein said orienting device (74) comprises a supporting element (77) which is movable to select one of said disks (33, 34); said selecting means (43-46, 84-87, 88) also comprising a second servomotor (87) for rotating a screw (86) engaging a nut screw (84) carried by said supporting element (77).

12. A punching machine (1) as claimed in any one of Claims 6 to 11, wherein each of the seats (36, 37) in said store (31) is integral with a ring gear (82); said orienting device (74) comprising a further servomotor (76) integral with a pinion (79) which engages said ring gear (82) to orient said punch assembly (8) and/or said die assembly (9).

13. A punching machine (1) as claimed in any one of Claims 2 to 12, wherein said device (110) comprises an amplifier (120); a data processing station (130); and an electronic interface (14) connected to said control unit (200).

14. A punching machine (1) as claimed in Claim 4, wherein said top turret (6) is offset with respect to said bottom turret (7),

15. A punching system comprising a punching machine (1), and a store (31) for storing a number of punch assemblies (8) and a number of die assemblies (9); the system being characterized by comprising, at said punching machine (1) and/or at said store (31), a device (110) as claimed in any one of Claims 1 to 14.

16. A punching system comprising a punching machine (1), a store (31), and a change device (32); the system being characterized by comprising, at said punching machine (1) and/or at said store (31) and/or at said change device (32), at least one device (110) as claimed in Claims 1 to 14.

17. A method of loading punch assemblies and die assemblies (8, 9) into a store (31), each punch assembly and die assembly (8, 9) comprising a respective microchip (100); the method being characterized by comprising a step of loading the punch assemblies and die assemblies (8, 9) randomly inside respective seats (36, 37) in the store (31); and a step of loading and memorizing the characteristics of each punch assembly and die assembly (8, 9) in a control unit (200) by means of a device (110) for reading/writing data on said microchips (100).

## Amended claims

### Amended claims in accordance with Rule 86(2) EPC.

1. A punching machine (1) comprising a work table (4), a work station (3), and a member for moving metal sheets (2) on the work table (4) to and from the work station (3); said work station (3) comprising a ram (12) for pressing a punch (24) onto a respective die assembly (9) to effect the punching operation; wherein each punch assembly (8) and each die assembly (9) are each provided with a microchip (100); and wherein said punching machine (1) also comprising at least one device (110) for reading and writing on said microchips (100) data relative to the respective punch assembly (8) and/or the respective die assembly (9); the punching machine (1) being characterized in that said device (110), together with a control unit (200), provides for pairing each punch assembly (8) with the correct die assembly (9) according to the particular machining operation and the thickness of the sheet (2).
2. A punching machine (1) as claimed in Claim 1, wherein said device (110) is associated with a store (31) for storing a number of punch assemblies (8) and die assemblies (9).
3. A punching machine (1) as claimed in any one of the foregoing Claims, wherein said device (110) is located at a top turret (6) and a bottom turret (7).
4. A punching machine (1) as claimed in Claim 2, wherein each of said microchips (100) is associated with a respective seat (36, 37) in said store (31); said seats (36, 37) respectively housing said punch assemblies (8) or said die assemblies (9).
5. A punching machine (1) as claimed in Claim 2, wherein each of said microchips (100) is associated with a respective portion (89, 90) of a respective punch assembly (8) or a respective die assembly (9).
6. A punching machine (1) as claimed in any one of Claims 2 to 5, wherein at least one of the punch assembly-die assembly pairs (8-9) in said store (31) is orientable selectively; said orientation being effected by an orienting device (74) associated with said store (31).
7. A punching machine (1) as claimed in Claim 6, wherein said orienting device (74) is located inside said store (31); selecting means (43-46, 84-87, 88) being provided to select the punch assembly (8) and/or the die assembly (9) to be oriented.
8. A punching machine (1) as claimed in any one of Claims 5 to 7, wherein said selecting means (43-46, 84-87, 88) comprise a read/write head (88) for reading/writing data in said microchips (100).
9. A punching machine (1) as claimed in Claim 7 or 8, wherein said selecting means (43-46, 84-87, 88) comprise a servomotor (46) for rotating disks (33, 34), forming part of said store (31), with respect to said orienting device (74).
10. A punching machine (1) as claimed in Claim 9, wherein said orienting device (74) comprises a supporting element (77) which is movable to select one of said disks (33, 34); said selecting means (43-46, 84-87, 88) also comprising a second servomotor (87) for rotating a screw (86) engaging a nut screw (84) carried by said supporting element (77).
11. A punching machine (1) as claimed in any one of Claims 5 to 10, wherein each of the seats (36, 37) in said store (31) is integral with a ring gear (82); said orienting device (74) comprising a further servomotor (76) integral with a pinion (79) which engages said ring gear (82) to orient said punch assembly (8) and/or said die assembly (9).
12. A punching machine (1) as claimed in any one of the foregoing Claims, wherein said device (110) comprises an amplifier (120); a data processing station (130); and an electronic interface (14) connected to said control unit (200).
13. A punching machine (1) as claimed in Claim 3, wherein said top turret (6) is offset with respect to said bottom turret (7).
14. A punching machine (1) as claimed in Claim 2, wherein the loading of punch assemblies and die assemblies (8, 9) into said store (31) comprises a first step of loading the punch assemblies and die assemblies (8, 9) randomly inside respective seats (36, 37) in the store (31), and a second step of memorizing the characteristics of each punch assembly and die assembly (8, 9) in a control unit (200) by means of a device (110) for reading/writing data on said microchips (100).
15. A punching system comprising a punching machine (1), and a store (31) for storing a number of punch assemblies (8) and a number of die assemblies (9); the system being characterized by comprising, at said punching machine (1) and/or at said store (31), a device (110) as claimed in any one of Claims 1 to 14.
16. A punching system comprising a punching machine (1), a store (31), and a change device (32); the system being characterized by comprising, at said punching machine (1) and/or at said store (31) and/or at said change device (32), at least one device (110) as claimed in Claims 1 to 14
